# EUROPÄISCHE PATENTSCHRIFT

(11) **EP 4 612 024 B1**
(45) Veröffentlichungstag und Bekanntmachung des Hinweises auf die Patenterteilung: **28.10.2026**
(21) Anmeldenummer: 23782827.2
(22) Anmeldetag: 27.09.2023
(51) Int. Cl.: B60R 13/00, B60R 13/04, B60Q 1/00, B60Q 1/26, B60R 19/50

(54) **AUSSENVERKLEIDUNGSANORDNUNG FÜR EIN KRAFTFAHRZEUG UND KRAFTFAHRZEUG MIT EINER SOLCHEN AUSSENVERKLEIDUNGSANORDNUNG**
EXTERIOR TRIM ASSEMBLY FOR A MOTOR VEHICLE, AND MOTOR VEHICLE COMPRISING SUCH AN EXTERIOR TRIM ASSEMBLY
ENSEMBLE HABILLAGE EXTÉRIEUR POUR VÉHICULE À MOTEUR ET VÉHICULE À MOTEUR COMPRENANT UN TEL ENSEMBLE HABILLAGE EXTÉRIEUR

(30) Priorität: 31.10.2022 DE 102022004060
(43) Veröffentlichungstag der Anmeldung: 10.09.2025
(73) Patentinhaber: Mercedes-Benz Group AG, 70372 Stuttgart (DE)
(72) Erfinder: HUMPENOEDER, Jens, 89077 Ulm (DE); BÄHNSCH, Annika, 89297 Roggenburg (DE)
(74) Vertreter: Novagraaf Group
(86) Internationale Anmeldenummer: PCT/EP2023/076683
(87) Internationale Veröffentlichungsnummer: WO 2024/094371

(56) Entgegenhaltungen:
- EP-A1- 2 589 859
- EP-A1- 4 074 551
- DE-U1- 202020 104 697
- DE-U1- 202022 103 954
- FR-A1- 3 026 083
- FR-A1- 3 048 486
- US-A- 5 184 883

## Beschreibung

Die Erfindung betrifft eine Außenverkleidungsanordnung für ein Kraftfahrzeug gemäß Oberbegriff des Anspruchs 1. Des Weiteren betrifft die Erfindung ein Kraftfahrzeug mit wenigstens einer solchen Außenverkleidungsanordnung.

Die DE 20 2020 104 697 U1 beschreibt eine Verkleidungsanordnung für ein Fahrzeug, bei welcher ein Formbauteil aus einem Kunststoff Unterbrechungsbereiche aufweist. Ein durchleuchtbares Dekorbauteil, welches hinter dem Formbauteil angeordnet ist, weist mehrere Dekorabschnitte auf. Die Dekorabschnitte sind in einem Sichtbereich durch jeweils einen der Unterbrechungsbereiche freigelegt. Das Dekorbauteil weist eine durchleuchtbare Metallschicht auf, wobei zur Durchleuchtung des Dekorbauteils eine Beleuchtungseinrichtung vorgesehen ist. Als nachteilig ist hierbei der Umstand anzusehen, dass es zum Durchleuchten der Metallschicht erforderlich ist, eine entsprechend hohe Leuchtstärke der Beleuchtungseinrichtung vorzusehen. Folglich ist das Durchleuchten des Dekorbauteils inklusive der Metallschicht des Dekorbauteils mit einem entsprechend hohen Energieaufwand verbunden. Dieser hohe Energieaufwand ist ungünstig.

Aufgabe der vorliegenden Erfindung ist es, eine Außenverkleidungsanordnung der eingangs genannten Art zu schaffen, bei welcher eine verbesserte Sichtbarkeit der Zierelemente erreichbar ist, sowie ein Kraftfahrzeug mit einer solchen Außenverkleidungsanordnung anzugeben.

Diese Aufgabe wird durch eine Außenverkleidungsanordnung mit den Merkmalen des Anspruchs 1 und ein Kraftfahrzeug mit den Merkmalen des Anspruchs 8 gelöst.

Vorteilhafte Ausgestaltungen mit zweckmäßigen Weiterbildungen der Erfindung sind in den abhängigen Patentansprüchen und in der nachfolgenden Beschreibung angegeben.

Die erfindungsgemäße Außenverkleidungsanordnung für ein Kraftfahrzeug umfasst ein Verkleidungsbauteil, welches eine Frontseite aufweist. Die Frontseite ist in einer Einbaulage des Verkleidungsbauteils in dem Kraftfahrzeug einer Umgebung des Kraftfahrzeugs zugewandt. Die Außenverkleidungsanordnung umfasst ein an dem Verkleidungsbauteil angeordnetes Zierteil, welches eine Vielzahl von Zierelementen aufweist. Die Zierelemente sind in Aussparungen angeordnet, welche in dem Verkleidungsbauteil ausgebildet sind. Die Zierelemente sind über eine Mehrzahl von Verbindungselementen des Zierteils miteinander verbunden, wobei die Verbindungselemente an einer der Frontseite gegenüberliegenden Rückseite des Verkleidungsbauteils angeordnet sind. Die Außenverkleidungsanordnung umfasst eine Bewegungseinrichtung, mittels welcher wenigstens eines der Zierelemente aus einer ersten Position in eine zweite Position bewegbar ist. In der zweiten Position steht eine Sichtseite des wenigstens einen Zierelements über die Frontseite des Verkleidungsbauteils über. In der ersten Position ist die Sichtseite des wenigstens einen Zierelements weiter zu der Rückseite des Verkleidungsbauteils hin verlagert als in der zweiten Position.

Mittels der Bewegungseinrichtung kann demgemäß ein Herausfahren des wenigstens einen Zierelements aus dem Verkleidungsbauteil bewirkt werden. Bei in die zweite Position bewegtem und somit herausgefahrenem Zierelement ist die Sichtseite des wenigstens einen Zierelements bezogen auf die Frontseite des Verkleidungsbauteils versetzt, und zwar zur Umgebung des Verkleidungsbauteils hin versetzt angeordnet. Dementsprechend steht die Sichtseite des wenigstens einen Zierelements in der zweiten Position über die Frontseite des Verkleidungsbauteils über. Dies bringt es mit sich, dass das wenigstens eine Zierelement besser sichtbar ist als dann, wenn sich das wenigstens eine Zierelement in der ersten Position befindet. Folglich ist bei der die Bewegungseinrichtung umfassenden Außenverkleidungsanordnung eine verbesserte Sichtbarkeit der Zierelemente erreichbar.

Die verbesserte Sichtbarkeit des wenigstens einen Zierelements, welches mittels der Bewegungseinrichtung in die zweite Position bewegt ist, sorgt zudem für eine besonders gute optische Erfassbarkeit der Außenverkleidungsanordnung durch einen von der Umgebung her auf die Frontseite des Verkleidungsbauteils blickenden Betrachter. Dies ist im Hinblick darauf vorteilhaft, dass so auch die Sichtbarkeit des die Außenverkleidungsanordnung mit dem Verkleidungsbauteil aufweisenden Kraftfahrzeugs auf einfache Weise gesteigert werden kann.

Die Bewegungseinrichtung kann insbesondere als elektromechanischer und/oder pneumatischer und/oder hydraulischer Aktuator ausgebildet sein oder wenigstens einen solchen Aktuator umfassen.

Erfindungsgemäß ist weiterhin vorgesehen, dass die Sichtseite des wenigstens einen Zierelements lichtundurchlässig ausgebildet, wobei ein Grundkörper des wenigstens einen Zierelements zumindest bereichsweise für Licht einer Beleuchtungseinrichtung der Außenverkleidungsanordnung durchlässig ist. Der Grundkörper des wenigstens einen Zierelements steht in der zweiten Position zumindest bereichsweise über die Frontseite des Verkleidungsbauteils über. Folglich kann durch Bewegen des wenigstens einen Zierelements in die zweite Position erreicht werden, dass im Betrieb der Beleuchtungseinrichtung bereitgestelltes Licht über den zumindest bereichsweise lichtdurchlässig ausgebildeten Grundkörper in die Umgebung austreten kann.

Das Licht braucht jedoch nicht die für Licht undurchlässige Sichtseite des Zierelements zu durchleuchten. Vielmehr kann das Licht ungehindert über wenigstens eine Seitenflanke des Grundkörpers in die Umgebung gelangen, wobei die wenigstens eine Seitenflanke an die Sichtseite angrenzt. Dies bringt es in vorteilhafter Weise mit sich, dass der Energieaufwand zum Bereitstellen des Lichts mittels der Beleuchtungseinrichtung besonders gering gehalten ist.

Außerdem ist das Austreten des Lichts in die Umgebung über die wenigstens eine an die Sichtseite angrenzende Seite oder Seitenflanke des Grundkörpers im Hinblick auf eine verbesserte Sichtbarkeit des wenigstens einen in die zweite Position bewegten Zierelements vorteilhaft. Denn insbesondere bei Dunkelheit beziehungsweise in der Dämmerung kann durch das Betreiben der Beleuchtungseinrichtung und durch das Bewegen des wenigstens einen Zierelements in die zweite Position dafür gesorgt werden, dass das Licht sichtbar ist, welches aus dem zumindest bereichsweise lichtdurchlässigen Grundkörper des Zierelements in die Umgebung austritt.

Da die Sichtseite des wenigstens einen Zierelements lichtundurchlässig ausgebildet ist, ist es zum verbesserten Sichtbarmachen der Zierelemente günstig, die Beleuchtungseinrichtung lediglich dann zu betreiben, wenn das wenigstens eine Zierelement mittels der Bewegungseinrichtung in die zweite Position verbracht ist, in welcher der Grundkörper zumindest bereichsweise beziehungsweise zumindest ein Stück weit über die Frontseite des Verkleidungsbauteils übersteht. Denn bei in die zweite Position verbrachtem Zierelement kann das Auskoppeln des Lichts der Beleuchtungseinrichtung in die Umgebung besonders aufwandsarm und energiesparend erfolgen. Dies ist vorteilhaft, insbesondere wenn es sich bei dem die Außenverkleidungsanordnung aufweisenden Kraftfahrzeug um ein Elektrofahrzeug oder ein Hybridfahrzeug handelt, bei welchem ein Vorrat an elektrischer Energie zum Betreiben der Beleuchtungseinrichtung naturgemäß begrenzt ist.

Der Grundkörper kann beispielsweise aus einem transparenten oder transluzenten Material wie etwa Polycarbonat (PC) und/oder Polymethylmethacrylat (PMMA) und/oder Polypropylen (PP) gebildet sein. Die Sichtseite des Zierelements kann hierbei durch eine lichtundurchlässige Komponente des Zierelements gebildet sein, beispielsweise durch eine Lackfolie und/oder eine Heißprägefolie und/oder einen Lack oder dergleichen. Dementsprechend kann das Zierelement bereitgestellt sein, indem eine solche Komponente hinterspritzt wird, oder indem die Komponente nachträglich auf den Grundkörper aufgebracht wird, etwa durch Heißprägen und/oder Lackieren oder dergleichen.

Insbesondere wenn sämtliche an die Sichtseite angrenzenden Seiten oder Seitenflanken des Grundkörpers für das Licht der Beleuchtungseinrichtung durchlässig und somit transparent beziehungsweise transluzent ausgebildet sind, lässt sich das Licht der Beleuchtungseinrichtung sehr gut wahrnehmen, wenn das wenigstens eine Zierelement in die zweite Position bewegt ist. Dies ist vorteilhaft.

Vorzugsweise umfasst die Beleuchtungseinrichtung eine Mehrzahl von Lichtquellen, wobei dem jeweiligen Grundkörper des Zierelements eine jeweilige Lichtquelle zugeordnet ist. Auch dies ist einem geringen Energieverbrauch im Betrieb der Beleuchtungseinrichtung zuträglich. Denn die jeweilige Lichtquelle ist so sehr unmittelbar dort angeordnet, wo das von der Lichtquelle im Betrieb derselben abgegebene Licht in den Grundkörper des Zierelements eingekoppelt wird.

Vorzugsweise umfasst die Außenverkleidungsanordnung eine Steuerungseinrichtung, welche zum Ansteuern der Bewegungseinrichtung ausgebildet ist. Dadurch kann das Verbringen des wenigstens einen Zierelements aus der ersten Position in die zweite Position und zurück sehr bedarfsgerecht beziehungsweise situationsabhängig vorgenommen werden.

Zusätzlich oder alternativ kann vorgesehen sein, dass die Steuerungseinrichtung zum Ansteuern der Beleuchtungseinrichtung ausgebildet ist. Auf diese Weise lässt sich das Abgeben von Licht mittels der Beleuchtungseinrichtung, welches über den Grundkörper des Zierelements in die Umgebung gelangt, an jeweilige Situationen angepasst und somit besonders vorteilhaft realisieren.

Insbesondere kann vorgesehen sein, dass die Steuerungseinrichtung die Beleuchtungseinrichtung aktiviert, während die Bewegungseinrichtung das wenigstens eine Zierelement aus der ersten Position in die zweite Position bewegt. Zusätzlich oder alternativ kann vorgesehen sein, dass die Steuerungseinrichtung die Beleuchtungseinrichtung aktiviert, wenn das wenigstens eine Zierelement mittels der Bewegungseinrichtung in die zweite Position bewegt oder verbracht ist. Dadurch ist der Lichtaustritt aus dem Grundkörper in die Umgebung besonders gut erfassbar.

Die Bewegungseinrichtung kann dazu ausgebildet sein, die Zierelemente einzeln aus der ersten Position in die zweite Position zu bewegen. So kann die Sichtbarkeit der Zierelemente sehr individuell verbessert werden.

Besonders aufwandsarm ist es, wenn die Beleuchtungseinrichtung dazu ausgebildet ist, wenigstens eine Gruppe der Zierelemente gemeinsam aus der ersten Position in die zweite Position zu bewegen. Denn dadurch gestaltet sich das Verbringen einer Mehrzahl von Zierelementen zusammen aus der ersten Position in die zweite Position und zurück besonders einfach, wobei dieses Bewegen mittels der Bewegungseinrichtung bewirkbar ist.

Vorzugsweise ist die wenigstens eine Gruppe durch in einer Reihe angeordnete Zierelemente bereitgestellt. So kann dafür gesorgt werden, dass die in der vorzugsweise geraden Reihe nebeneinander angeordneten Zierelemente zusammen oder gemeinsam aus der ersten Position in die zweite Position bewegt werden. Dies ist der verbesserten Sichtbarkeit der in der Reihe angeordneten Zierelemente zuträglich, wenn sich die Zierelemente in der zweiten Position befinden.

Es kann auch vorgesehen sein, dass mittels der Bewegungseinrichtung nacheinander in jeweiligen Reihen angeordnete Gruppen von Zierelementen aus der ersten Position in die zweite Position und zurück bewegbar sind. Auch dies ist für eine verbesserte Sichtbarkeit der in die zweite Position bewegten Zierelemente vorteilhaft.

Des Weiteren kann vorgesehen sein, dass entlang der Reihe die einer Gruppe zugehörigen Zierelemente nacheinander aus der ersten Position in die zweite Position bewegt werden, wobei das jeweils in die zweite Position bewegte Zierelement zumindest vorübergehend in dieser zweiten Position verbleibt. Insbesondere kann das jeweils in die zweite Position bewegte Zierelement in der zweiten Position verbleiben, bis die übrigen Zierelemente der gleichen Reihe ebenfalls in die zweite Position verbracht sind.

Durch das zeitlich nacheinander stattfindende Ausfahren der Zierelemente entlang der Reihe aus dem Verkleidungsbauteil kann sehr gut eine Bewegung entlang der Reihe zum Ausdruck gebracht werden. Dies ist für eine gute optische Erfassbarkeit einer solchen Bewegung vorteilhaft. Eine durch das der Reihe nach stattfindende Ausfahren nachempfundene Bewegung ist besonders auffällig und somit für einen Betrachter gut erfassbar, wenn zudem die Beleuchtungseinrichtung betrieben wird, welche im Betrieb das Licht in den jeweiligen Grundkörper der Zierelemente einkoppelt.

Als weiter vorteilhaft hat es sich gezeigt, wenn die Bewegungseinrichtung dazu ausgebildet ist, sämtliche Zierelemente des Zierteils gemeinsam aus der ersten Position in die zweite Position zu bewegen. So gestaltet sich die Betätigung der Zierelemente in Form des Ausfahrens derselben aus dem Verkleidungsbauteil heraus besonders einfach. Insbesondere zu diesem Zweck kann das Zierteil eine ausreichend hohe Eigensteifigkeit aufweisen, sodass mittels der Bewegungseinrichtung zusammen mit dem Zierteil sämtliche Zierelemente aus der ersten Position in die zweite Position bewegbar sind.

Vorzugsweise schließt die Sichtseite des wenigstens einen Zierelements in der ersten Position bündig mit der Frontseite des Verkleidungsbauteils ab. So kann erreicht werden, dass die Zierelemente in der ersten Position nahezu unsichtbar in eine Fahrzeugaußenhaut integriert sind, welche in dem Kraftfahrzeug durch das Verkleidungsbauteil und das Zierteil der Außenverkleidungsanordnung bereitgestellt ist.

Es ist jedoch auch möglich, dass die Sichtseite des wenigstens einen Zierelements in der ersten Position bezogen auf die Frontseite des Verkleidungsbauteils, insbesondere geringfügig, zu der Rückseite des Verkleidungsbauteils hin verlagert ist.

Einer hohen Unauffälligkeit des wenigstens einen Zierelements in der ersten Position des Zierelements ist es weiter zuträglich, wenn eine Farbe der Sichtseite des wenigstens einen Zierelements einer Farbe der Frontseite des Verkleidungsbauteils gleich ist.

Insbesondere, wenn die Zierelemente in der ersten Position gut verborgen beziehungsweise für den von der Umgebung her auf das Verkleidungsbauteil blickenden Betrachter nicht oder kaum zu erkennen sind, ist das Erhöhen der Sichtbarkeit der Zierelemente durch Bewegen derselben aus der ersten Position in die zweite Position vorteilhaft, um die Sichtbarkeit der Zierelemente zu erhöhen.

Jedoch auch dann, wenn eine Farbe der Sichtseite des wenigstens einen Zierelements von der Farbe der Frontseite des Verkleidungsbauteils verschieden ist, trägt das Ausfahren der Zierelemente aus dem Verkleidungsbauteil, also das Verbringen der Zierelemente aus der ersten Position in die zweite Position, zu der in vorteilhafter Weise verbesserten Sichtbarkeit der Zierelemente bei.

Das erfindungsgemäße Kraftfahrzeug weist wenigstens eine erfindungsgemäße Außenverkleidungsanordnung auf. Hierbei sind an dem Kraftfahrzeug unterschiedliche Einsatzbereiche für die wenigstens eine Außenverkleidungsanordnung denkbar.

Insbesondere kann das Verkleidungsbauteil der wenigstens einen Außenverkleidungsanordnung als Stoßfängerverkleidung des Kraftfahrzeugs ausgebildet sein. Im Bereich wenigstens eines Stoßfängers des Kraftfahrzeugs ist eine erhöhte Wahrnehmbarkeit der Zierelemente von besonderem Vorteil, welche durch das Verbringen der Zierelemente aus der ersten Position in die zweite Position erreicht werden kann, indem die Bewegungseinrichtung dieses Ausfahren der Zierelemente bewirkt. Zusätzlich oder alternativ kann das Verkleidungsbauteil der wenigstens einen Außenverkleidungsanordnung als Kotflügel und/oder als Motorhaube des Kraftfahrzeugs ausgebildet sein. Auch in diesen Einsatzbereichen der Außenverkleidungsanordnung ist die Verbesserung der Sichtbarkeit der Zierelemente durch Ausfahren derselben aus dem Verkleidungsbauteil vorteilhaft.

Die für die erfindungsgemäße Außenverkleidungsanordnung beschriebenen Vorteile und bevorzugten Ausführungsformen gelten in analoger Weise für das erfindungsgemäße Kraftfahrzeug und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: schematisch ein Verkleidungsbauteil und ein Zierteil einer Außenverkleidungsanordnung für ein Kraftfahrzeug;
- Fig. 2: das Zierteil in einer Einbauposition, in welcher Zierelemente des Zierteils in Aussparungen angeordnet sind, welche in dem Verkleidungsbauteil ausgebildet sind;
- Fig. 3: in einer schematischen Seitenansicht zwei der Zierelemente in einer ersten Position, in welcher eine Sichtseite der Zierelemente bündig mit einer Frontseite des Verkleidungsbauteils abschließt;
- Fig. 4: in einer schematischen Seitenansicht die Zierelemente gemäß Fig. 3 in einer zweiten Position, in welcher die Zierelemente aus den Aussparungen ausgefahren sind und die Sichtseite des jeweiligen Zierelements über die Frontseite des Verkleidungsbauteils übersteht;
- Fig. 5: schematisch das Austreten von Licht über Seitenflanken von Grundkörpern der Zierelemente in die Umgebung; und
- Fig. 6: schematisch ein Kraftfahrzeug, bei welchem die das Verkleidungsbauteil und das Zierbauteil umfassende Außenverkleidungsanordnung verwendet werden kann oder verwendet wird.

In den Figuren sind gleiche oder funktionsgleiche Elemente mit jeweils gleichen Bezugszeichen versehen.

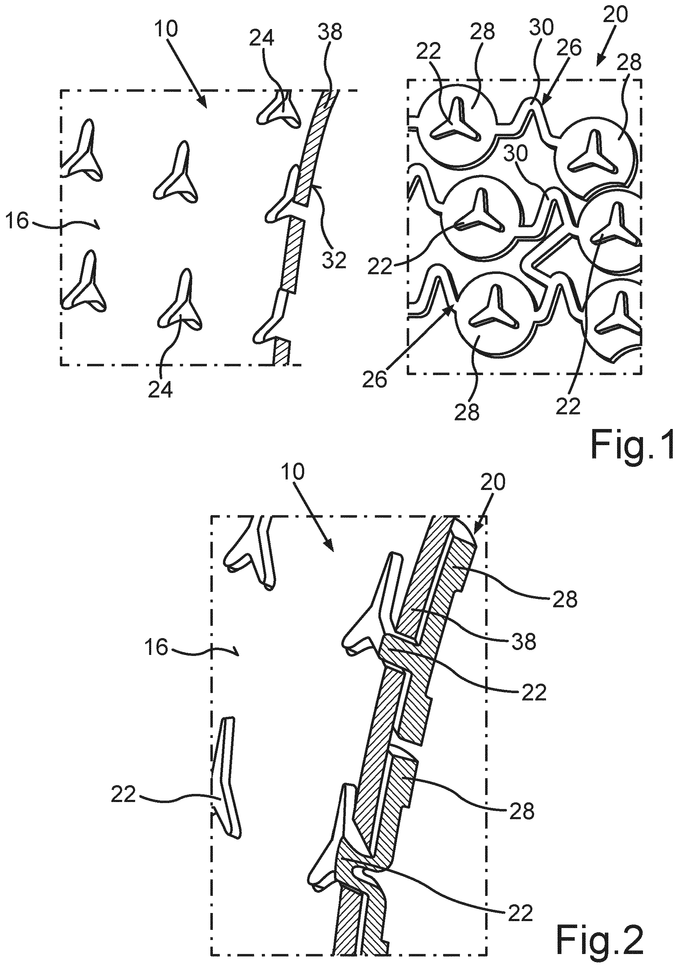

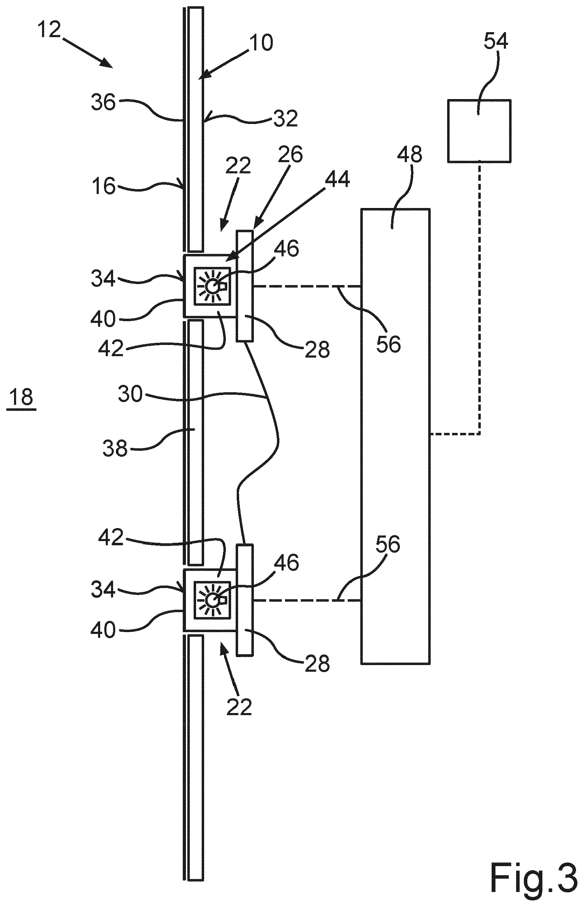

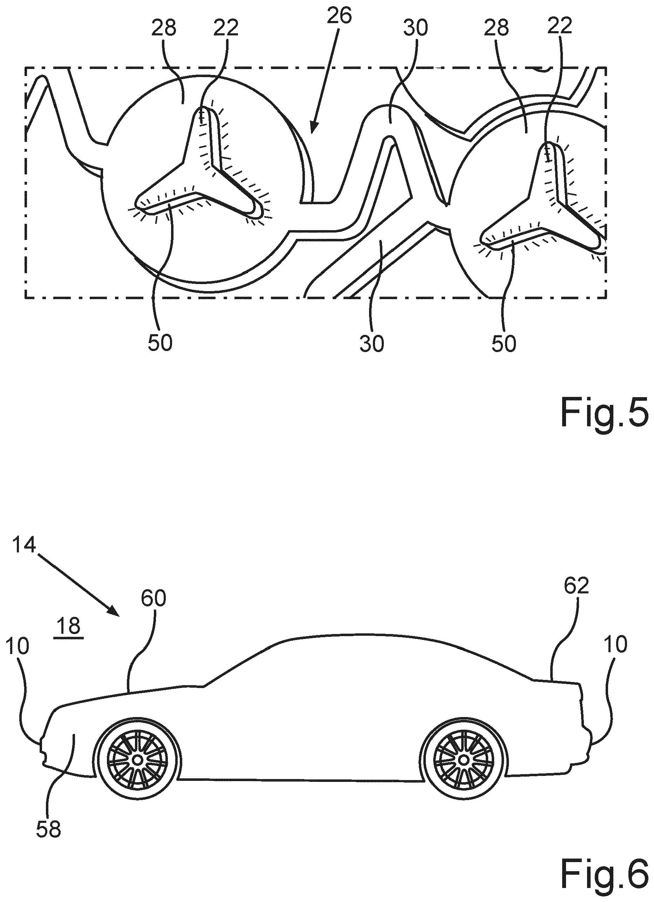

In Fig. 1 ist in einer schematischen Perspektivansicht ein Verkleidungsbauteil 10 gezeigt, welches Teil einer in Fig. 3 schematisch gezeigten Außenverkleidungsanordnung 12 für ein Kraftfahrzeug 14 (vergleiche Fig. 6) ist. Das Verkleidungsbauteil 10 weist eine Frontseite 16 auf, welche dann, wenn das Verkleidungsbauteil 10 beziehungsweise die Außenverkleidungsanordnung 12 in das Kraftfahrzeug 14 eingebaut ist, einer Umgebung 18 des Kraftfahrzeugs 14 (vergleiche Fig. 6) und somit auch einer Umgebung 18 der Außenverkleidungsanordnung 12 (vergleiche Fig. 3) zugewandt ist.

Die Außenverkleidungsanordnung 12 umfasst außerdem ein in Fig. 1 gezeigtes Zierteil 20, welches eine Vielzahl von Zierelementen 22 aufweist. Als Beispiel für die Zierelemente 22 sind in Fig. 1 dreizackige Sterne dargestellt, wobei aus Gründen der Übersichtlichkeit lediglich einige dieser Zierelemente 22 in Fig. 1 mit Bezugszeichen versehen sind. Mit den Zierelementen 22 korrespondieren Aussparungen 24, welche in dem Verkleidungsbauteil 10 ausgebildet sind. Mit anderen Worten entspricht eine Außenkontur des jeweiligen Zierelements 22 vorliegend vorzugsweise einer Innenkontur der jeweiligen Aussparung 24. Dies ermöglicht es, jeweils eines der Zierelemente 22 in einer jeweiligen der Aussparungen 24 anzuordnen, welche in dem Verkleidungsbauteil 10 ausgebildet sind.

Das vorliegend eigensteife Zierteil 20 weist eine Mehrzahl von Verbindungselementen 26 auf, über welche die Zierelemente 22 miteinander verbunden sind. Dementsprechend ist das Zierteil 20 nach Art eines eigensteifen Ziergitters ausgebildet, bei welchem dafür gesorgt ist, dass die Zierelemente 22 in einer mit der jeweiligen Aussparung 24 korrespondierenden Anordnung gehalten sind, wenn die Zierelemente 22 in die korrespondierenden Aussparungen 24 eingebracht werden. Die Verbindungselementen 26 verleihen hierbei dem Zierteil 20 die Eigensteifigkeit, um die Zierelemente 22 im Bereich der Aussparungen 24 zu positionieren.

Insbesondere, wenn die Zierelemente 22 wie vorliegend beispielhaft gezeigt als filigrane Strukturen etwa in Form der dreizackigen Sterne ausgebildet sind, ist es vorteilhaft, wenn die Verbindungselemente 26 Stützbereiche 28 umfassen, welche gemäß der schematischen Darstellung in Fig. 1 als plattenförmige und vorliegend runde Trägerteile für die Zierelemente 22 ausgebildet sind. Des Weiteren umfassen die Verbindungselemente 26 des Zierteils 20 gemäß Fig. 1 eine Mehrzahl von Stegen 30, über welche vorliegend die Stützbereiche 28 miteinander gekoppelt sind.

Durch die Verbindungselemente 26, welche vorliegend die Stützbereiche 28 und die Stege 30 umfassen, ist eine eigensteife Gitterstruktur des als Ziergitter ausgebildeten Zierteils 20 bereitgestellt, durch welche die Zierelemente 22 in einer Lage gehalten sind, welche mit der Lage der Aussparungen 24 korrespondiert, die in dem Verkleidungsbauteil 10 ausgebildet sind.

Die Aussparungen 24 können bei der Herstellung des Verkleidungsbauteils 10 direkt mit hergestellt werden. Dies gestaltet sich insbesondere dann sehr einfach, wenn das Verkleidungsbauteil 10 aus einem Kunststoff gebildet ist, etwa durch Spritzgießen. Denn dann können die Aussparungen 24 direkt beim Spritzgießen des Verkleidungsbauteils 10 mit hergestellt werden.

Alternativ ist es möglich, die Aussparungen 24 nachträglich durch mechanische Bearbeitung in dem Verkleidungsbauteil 10 auszubilden, etwa durch Stanzen und/oder Laserstrahlschneiden und/oder Wasserstrahlschneiden oder dergleichen. Entsprechende Trennverfahren sind auch dann anwendbar, wenn das Verkleidungsbauteil 10 aus einem Metall gebildet ist.

In Fig. 2 ist ausschnittsweise die Anordnung des Zierteils 20 an dem Verkleidungsbauteil 10 gezeigt, bei welcher die Zierelemente 22 in die Aussparungen 24 eingebracht sind, welche in dem Verkleidungsbauteil 10 ausgebildet sind. Dementsprechend sind die Verbindungselemente 26, von welchen in Fig. 2 lediglich die Stützbereiche 28 erkennbar sind, an einer der Frontseite 16 gegenüberliegenden Rückseite 32 des Verkleidungsbauteils 10 angeordnet.

In Fig. 3 ist schematisch gezeigt, wie die jeweiligen Zierelemente 22 relativ zu dem Verkleidungsbauteil 10 angeordnet sein können. Dementsprechend sind in Fig. 3 die Zierelemente 22 in eine erste Position verbracht oder bewegt gezeigt, in welcher eine Sichtseite 34 des jeweiligen Zierelements 22 bündig mit der Frontseite 16 des Verkleidungsbauteils 10 abschließt.

Die Frontseite 16 des Verkleidungsbauteils 10 kann durch wenigstens eine Lackschicht 36 gebildet sein, welche auf einen Trägerkörper 38 des Verkleidungsbauteils 10 aufgebracht ist. In Fig. 1 und in Fig. 2 ist aus Gründen der Übersichtlichkeit die Lackschicht 36 oder dergleichen Beschichtung des Trägerkörpers 38 nicht näher dargestellt.

In analoger Weise kann die Sichtseite 34 der Zierelemente 22 durch eine Folie 40 und/oder einen Lack oder dergleichen bereitgestellt sein. Beispielsweise kann auf einen Grundkörper 42 des jeweiligen Zierelements 22 die Folie 40 aufgebracht sein. Ebenso ist es möglich, das Zierelement 22 bereitzustellen, indem die beispielsweise als Lackfolie ausgebildete Folie 40 mit einem Material hinterspritzt wird, durch welches der Grundkörper 42 des Zierelements 22 bereitgestellt wird. In analoger Weise kann die Sichtseite 34 des Zierelements 22 bereitgestellt werden, indem der Grundkörper 42 mit wenigstens einer Lackschicht oder dergleichen versehen wird, also lackiert wird.

Vorliegend ist die Sichtseite 34 der Zierelemente 22 lichtundurchlässig ausgebildet. Dies kann beispielsweise erreicht werden, indem die Folie 40 oder dergleichen Beschichtung des Grundkörpers 42 aus einem lichtundurchlässigen Material gebildet ist. Demgegenüber ist der Grundkörper 42 des jeweiligen Zierelements 22 vorliegend aus einem lichtdurchlässigen Material gebildet, beispielsweise aus Polycarbonat (PC), Polymethylmethacrylat (PMMA) oder Polypropylen (PP).

Gemäß Fig. 3 weist die Außenverkleidungsanordnung 12 eine Beleuchtungseinrichtung 44 auf, welche gemäß Fig. 3 eine Mehrzahl von Lichtquellen 46 umfasst. Vorliegend ist dem jeweiligen Grundkörper 42 eine jeweilige Lichtquelle 46 zugeordnet. Beispielsweise können die Lichtquellen 46 der Beleuchtungseinrichtung 44 als Leuchtdioden ausgebildet sein.

In der in Fig. 3 gezeigten ersten Position der Zierelemente 22 ist ein Betreiben der Beleuchtungseinrichtung 44 beziehungsweise ein Aktivieren der Lichtquellen 46 nicht zielführend. Denn die lichtundurchlässige Sichtseite 34 der Zierelemente 22 verhindert in der ersten Position der Zierelemente 22, dass von den Lichtquellen 46 abgegebenes Licht in die Umgebung 18 der Außenverkleidungsanordnung 12 beziehungsweise des Kraftfahrzeugs 14 (vergleiche Fig. 6) gelangen kann. Daher ist die Beleuchtungseinrichtung 44 vorzugsweise nicht in Betrieb, wenn sich die Zierelemente 22 in der in Fig. 3 gezeigten ersten Position befinden.

Insbesondere, wenn eine Farbe der Sichtseite 34 einer Farbe der Frontseite 16 gleich ist, sind die Zierelemente 22 in der in Fig. 3 gezeigten ersten Position nahezu unsichtbar in die Fahrzeugaußenhaut des Kraftfahrzeugs 14 integriert.

Es ist jedoch auch möglich, etwa durch Verwendung entsprechender Folien 40 und/oder Lacke oder dergleichen, den Zierelementen 22 an ihren Sichtseiten 34 eine andere Farbe zu verleihen als sie das Verkleidungsbauteil 10 an der Frontseite 16 aufweist. Beispielsweise können die Zierelemente 22 an der Sichtseite 34 eine Chromoptik oder dergleichen aufweisen. Auch in diesem Fall ist es jedoch bevorzugt, dass die Sichtseiten 34 der Zierelemente 22 lichtundurchlässig ausgebildet sind.

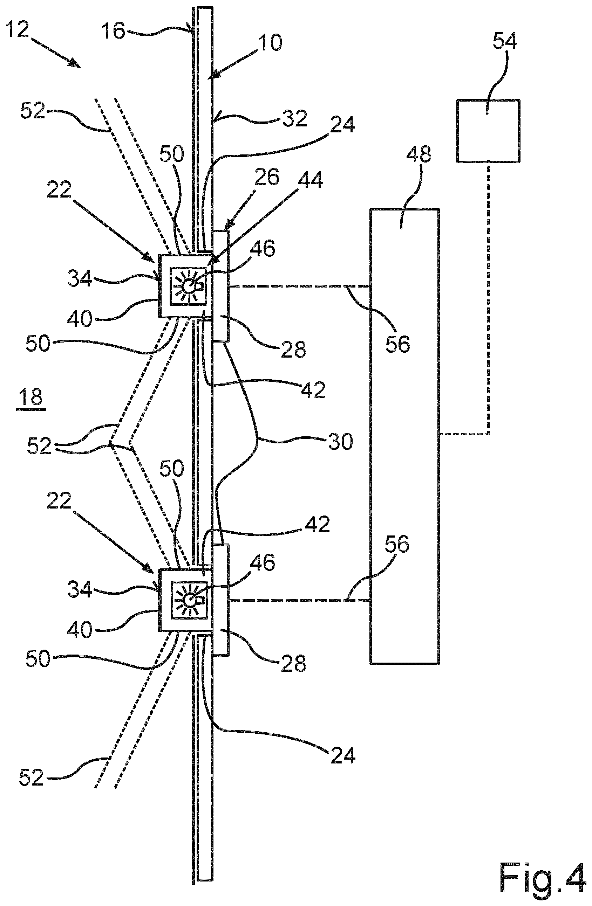

Gemäß Fig. 3 umfasst die Außenverkleidungsanordnung 12 eine Bewegungseinrichtung 48, welche in Fig. 4 lediglich stark schematisiert dargestellt ist. Die Bewegungseinrichtung 48 ist dazu ausgebildet, die Zierelemente 22 aus der in Fig. 3 gezeigten ersten Position in eine in Fig. 4 gezeigte zweite Position zu bewegen. In der in Fig. 4 gezeigten zweiten Position der Zierelemente 22 steht die Sichtseite 34 über die Frontseite 16 des Verkleidungsbauteils 10 über.

Dementsprechend liegen Seitenflanken 50 der vorliegend aus dem lichtdurchlässigen Material gebildeten Grundkörper 42 der Zierelemente 22 ein Stück weit frei. Denn im Bereich dieser lichtdurchlässigen Seitenflanken 50 steht der Grundkörper 42 über die Frontseite 16 des Verkleidungsbauteils 10 über. Dementsprechend kann das von den Lichtquellen 46 abgegebene beziehungsweise in den jeweiligen Grundkörper 42 eingekoppelte Licht über diese Seitenflanken 50 oder seitlichen Außenwände oder dergleichen an die Sichtseite 34 angrenzenden Seiten des Grundkörpers 42 in die Umgebung 18 austreten. Entsprechende Lichtstrahlen 52 sind in Fig. 4 schematisch dargestellt, wobei aus Gründen der Übersichtlichkeit lediglich einige der Lichtstrahlen 52 mit Bezugszeichen versehen sind.

Die vorliegend zum Aussenden von Licht ausgebildeten Zierelemente 22 können also gut und einfach verborgen werden, indem die Zierelemente 22 in die erste Position (vergleiche Fig. 3) bewegt werden. Die Bewegung der Zierelemente 22 aus der ersten Position in die zweite Position (vergleiche Fig. 4) und zurück wird mittels der in Fig. 3 und Fig. 4 schematisch gezeigten Bewegungseinrichtung 48 bewerkstelligt.

Wenn die Lichtquellen 46 ausgeschaltet sind und zudem die Zierelemente 22 in die erste Position (vergleiche Fig. 3) bewegt sind, sind die Zierelemente 22 nahezu unsichtbar in die Außenhaut des Kraftfahrzeugs 14 integriert, welche durch die Außenverkleidungsanordnung 12 bereitgestellt ist. Wenn die Lichtquellen 46 demgegenüber eingeschaltet sind und zugleich die Zierelemente 22 ausgefahren sind, sodass die Sichtseiten 34 der Zierelemente 22 über die Frontseite 16 des Verkleidungsbauteils 10 überstehen, kann das aus dem jeweiligen Grundkörper 42 der Zierelemente 22 austretende Licht sehr gut erfasst werden.

Zudem braucht nicht die Sichtseite 34 der Zierelemente 22 durchleuchtet zu werden, um für eine Sichtbarkeit der Zierelemente 22 zu sorgen. Und durch das Ausfahren der Zierelemente 22 derart, dass die Grundkörper 42 bereichsweise aus der jeweiligen Aussparung 24 in Richtung der Frontseite 16 des Verkleidungsbauteils 10 herausragen, ist eine besonders gute Sichtbarkeit der Zierelemente 22 gegeben. So kann dafür gesorgt werden, dass auch das Kraftfahrzeug 14 (vergleiche Fig. 6) gut wahrgenommen wird. Dies ist beispielsweise aus Gründen der Sicherheit vorteilhaft, insbesondere bei Nacht oder in der Dämmerung.

In Fig. 3 und in Fig. 4 ist schematisch eine Steuerungseinrichtung 54 der Außenverkleidungsanordnung 12 gezeigt, welche vorzugsweise zum Ansteuern der Bewegungseinrichtung 48 und der Beleuchtungseinrichtung 44 ausgebildet ist. Dementsprechend kann die Steuerungseinrichtung 54 sehr einfach bewirken, dass die Lichtquellen 46 eingeschaltet werden, während die Zierelemente 22 aus der in Fig. 3 gezeigten ersten Position in die in Fig. 4 gezeigte zweite Position bewegt werden und/oder wenn sich die Zierelemente 22 in der in Fig. 4 gezeigten zweiten Position befinden.

Kinematikelemente 56 der Bewegungseinrichtung 48 sind in Fig. 3 und in Fig. 4 stark schematisiert dargestellt. Beispielsweise können die Kinematikelemente 56 an den jeweiligen Stützbereichen 28 der Verbindungselemente 26 (vergleiche Fig. 1) ansetzen. Insbesondere auf diese Weise kann erreicht werden, dass die Zierelemente 22 einzeln ausgefahren, also einzeln von der in Fig. 3 gezeigten ersten Position in die in Fig. 4 gezeigte zweite Position bewegt werden.

Es kann jedoch auch vorgesehen sein, dass mittels geeigneter Kinematikelemente 56 der Bewegungseinrichtung 48 jeweilige Gruppen der Zierelemente 22 gemeinsam aus der ersten Position in die zweite Position bewegt werden. Beispielsweise können die Zierelemente 22 in dem Ziergitter in vertikalen und/oder horizontalen Reihen angeordnet sein, wie dies schematisch in Fig. 1 veranschaulicht ist. Dementsprechend kann mittels der Bewegungseinrichtung 48 als eine solche Gruppe beispielsweise eine derartige Reihe von nebeneinander angeordneten Zierelementen 22 aus der in Fig. 3 gezeigten ersten Position in die in Fig. 4 gezeigte zweite Position und zurück bewegt werden.

Vorliegend sind die Zierelemente 22 des Zierteils 20 in der ersten Position, in welcher die Zierelemente 22 möglichst weitgehend verborgen sind, bündig mit der Frontseite 16 des Verkleidungsbauteils 10 angeordnet (vergleiche Fig. 3). Für die Lichtinszenierung (vergleiche Fig. 4) können die Zierelemente 22 mittels der Bewegungseinrichtung 48 ausgefahren werden, und das Licht wird über die Seitenflanken 50 der Grundkörper 42 der Zierelemente 22 in die Umgebung 18 abgestrahlt (vergleiche Fig. 4).

In Fig. 5 ist schematisch gezeigt, wie über die Seitenflanken 50 der jeweiligen Grundkörper 42 der Zierelemente 22 das Licht der Beleuchtungseinrichtung 44 in die Umgebung 18 austreten kann. Aus Gründen der Übersichtlichkeit ist in Fig. 5 das Verkleidungsbauteil 10 nicht gesondert dargestellt.

Gemäß Fig. 6 kann das Verkleidungsbauteil 10 der Außenverkleidungsanordnung 12 beispielsweise als Stoßfängerverkleidung des Kraftfahrzeugs 14 ausgebildet sein, etwa als frontseitige Stoßfängerverkleidung oder als heckseitige Stoßfängerverkleidung. Es ist jedoch auch möglich, die Außenverkleidungsanordnung 12 im Bereich eines Kotflügels 58 und/oder einer Motorhaube 60 und/oder eines Heckdeckels 62 des Kraftfahrzeugs 14 anzuordnen.

Insgesamt zeigen die Beispiele, wie durch die Außenverkleidungsanordnung 12 eine verborgene Lichtfunktion bereitgestellt werden kann, bei welcher das aus den Zierelementen 22 austretende Licht und somit auch die Zierelemente 22 selber für einen Betrachter in vorteilhafter Weise gut sichtbar ist.

## Patentansprüche

1. Außenverkleidungsanordnung für ein Kraftfahrzeug (14), mit einem Verkleidungsbauteil (10), welches eine Frontseite (16) aufweist, wobei die Frontseite (16) in einer Einbaulage des Verkleidungsbauteils (10) in dem Kraftfahrzeug (14) einer Umgebung (18) des Kraftfahrzeugs (14) zugewandt ist, wobei die Außenverkleidungsanordnung (12) ein an dem Verkleidungsbauteil (10) angeordnetes Zierteil (20) umfasst, welches eine Vielzahl von Zierelementen (22) aufweist, wobei die Zierelemente (22) in Aussparungen (24) angeordnet sind, welche in dem Verkleidungsbauteil (10) ausgebildet sind, wobei die Zierelemente (22) über eine Mehrzahl von Verbindungselementen (26) des Zierteils (20) miteinander verbunden sind, und wobei die Verbindungselemente (26) an einer der Frontseite (16) gegenüberliegenden Rückseite (32) des Verkleidungsbauteils (10) angeordnet sind,
**dadurch gekennzeichnet, dass**
die Außenverkleidungsanordnung (12) eine Bewegungseinrichtung (48) umfasst, mittels welcher wenigstens eines der Zierelemente (22) aus einer ersten Position in ein zweite Position bewegbar ist, wobei eine Sichtseite (34) des wenigstens einen Zierelements (22) in der zweiten Position über die Frontseite (16) des Verkleidungsbauteils (10) übersteht, und wobei die Sichtseite (34) des wenigstens einen Zierelements (22) in der ersten Position weiter zu der Rückseite (32) des Verkleidungsbauteils (10) hin verlagert ist als in der zweiten Position, und dass die Sichtseite (34) des wenigstens einen Zierelements (22) lichtundurchlässig ausgebildet ist, wobei ein Grundkörper (42) des wenigstens einen Zierelements (22), welcher in der zweiten Position zumindest bereichsweise über die Frontseite (16) des Verkleidungsbauteils (10) übersteht, zumindest bereichsweise für Licht einer Beleuchtungseinrichtung (44) der Außenverkleidungsanordnung (12) durchlässig ist.

2. Außenverkleidungsanordnung nach Anspruch 1,
**dadurch gekennzeichnet, dass**
die Beleuchtungseinrichtung (44) eine Mehrzahl von Lichtquellen (46) umfasst, wobei dem jeweiligen Grundkörper (42) des Zierelements (22) eine jeweilige Lichtquelle (46) zugeordnet ist.

3. Außenverkleidungsanordnung nach Anspruch 1 oder 2,
**dadurch gekennzeichnet, dass**
die Außenverkleidungsanordnung (12) eine Steuerungseinrichtung (54) umfasst, welche zum Ansteuern der Bewegungseinrichtung (48) und/oder der Beleuchtungseinrichtung (44) ausgebildet ist.

4. Außenverkleidungsanordnung nach einem der vorhergehenden Ansprüche, **dadurch gekennzeichnet, dass**
die Bewegungseinrichtung (48) dazu ausgebildet ist, wenigstens eine Gruppe der Zierelemente (22) gemeinsam aus der ersten Position in die zweite Position zu bewegen, wobei die wenigstens eine Gruppe durch in einer Reihe angeordnete Zierelemente (22) bereitgestellt ist.

5. Außenverkleidungsanordnung nach einem der vorhergehenden Ansprüche, **dadurch gekennzeichnet, dass**
die Bewegungseinrichtung (48) dazu ausgebildet ist, sämtliche Zierelemente (22) des Zierteils (20) gemeinsam aus der ersten Position in die zweite Position zu bewegen.

6. Außenverkleidungsanordnung nach einem der vorhergehenden Ansprüche, **dadurch gekennzeichnet, dass**
die Sichtseite (34) des wenigstens einen Zierelements (22) in der ersten Position bündig mit der Frontseite (16) des Verkleidungsbauteils (10) abschließt.

7. Außenverkleidungsanordnung nach einem der vorhergehenden Ansprüche, **dadurch gekennzeichnet, dass**
eine Farbe der Sichtseite (34) des wenigstens einen Zierelements (22) einer Farbe der Frontseite (16) des Verkleidungsbauteils (10) gleich ist.

8. Kraftfahrzeug mit wenigstens einer Außenverkleidungsanordnung (12) nach einem der Ansprüche 1 bis 7.

## Claims

1. Outer trim arrangement for a motor vehicle (14), comprising a trim component (10) which has a front face (16), wherein the front face (16), in a mounted position of the trim component (10) in the motor vehicle (14), faces surroundings (18) of the motor vehicle (14), wherein the outer trim arrangement (12) comprises a decorative part (20) arranged at the trim component (10), which decorative part has a plurality of decorative elements (22), wherein the decorative elements (22) are arranged in recesses (24) which are formed in the trim component (10), wherein the decorative elements (22) are connected to one another via a plurality of connecting elements (26) of the decorative part (20), and wherein the connecting elements (26) are arranged at a rear face (32) of the trim component (10) opposite the front face (16),
**characterized in that**
the outer trim arrangement (12) comprises a movement device (48) by means of which at least one of the decorative elements (22) can be moved from a first position into a second position, wherein, in the second position, a visible face (34) of the at least one decorative element (22) projects beyond the front face (16) of the trim component (10), and wherein the visible face (34) of the at least one decorative element (22) is moved further toward the rear face (32) of the trim component (10) in the first position than in the second position, and **in that** the visible face (34) of the at least one decorative element (22) is opaque, wherein a main body (42) of the at least one decorative element (22), which main body, in the second position, projects, at least in regions, beyond the front face (16) of the trim component (10), is, at least in regions, transparent to light from an illumination device (44) of the outer trim arrangement (12).

2. Outer trim arrangement according to claim 1,
**characterized in that**
the illumination device (44) comprises a plurality of light sources (46), wherein a relevant light source (46) is assigned to the relevant main body (42) of the decorative element (22).

3. Outer trim arrangement according to claim 1 or 2,
**characterized in that**
the outer trim arrangement (12) comprises a control device (54) which is designed to control the movement device (48) and/or the illumination device (44).

4. Outer trim arrangement according to any of the preceding claims,
**characterized in that**
the movement device (48) is designed to move at least one group of the decorative elements (22) together from the first position into the second position, wherein the at least one group is provided by decorative elements (22) arranged in a row.

5. Outer trim arrangement according to any of the preceding claims,
**characterized in that**
the movement device (48) is designed to move all decorative elements (22) of the decorative part (20) together from the first position into the second position.

6. Outer trim arrangement according to any of the preceding claims,
**characterized in that**
in the first position, the visible face (34) of the at least one decorative element (22) lies flush with the front face (16) of the trim component (10).

7. Outer trim arrangement according to any of the preceding claims,
**characterized in that**
a color of the visible face (34) of the at least one decorative element (22) is the same as a color of the front face (16) of the trim component (10).

8. Motor vehicle comprising at least one outer trim arrangement (12) according to any of claims 1 to 7.

## Revendications

1. Ensemble de revêtement extérieur pour un véhicule automobile (14), comportant un composant de revêtement (10) qui présente une face avant (16), dans lequel la face avant (16), dans une position de montage du composant de revêtement (10) dans le véhicule automobile (14), est tournée vers un environnement (18) du véhicule automobile (14), dans lequel l'ensemble de revêtement extérieur (12) comprend une pièce décorative (20) disposée sur le composant de revêtement (10), laquelle pièce décorative présente une pluralité d'éléments décoratifs (22), dans lequel les éléments décoratifs (22) sont disposés dans des évidements (24) formés dans le composant de revêtement (10), dans lequel les éléments décoratifs (22) sont reliés entre eux par l'intermédiaire d'une pluralité d'éléments de liaison (26) de la pièce décorative (20), et dans lequel les éléments de liaison (26) sont disposés sur une face arrière (32) du composant de revêtement (10), laquelle face arrière est opposée à la face avant (16),
**caractérisé en ce que**
l'ensemble de revêtement extérieur (12) comprend un dispositif de déplacement (48) à l'aide duquel au moins l'un des éléments décoratifs (22) peut être déplacé d'une première position vers une seconde position, dans lequel la face visible (34) de l'au moins un élément décoratif (22) dépasse, dans la seconde position, de la face avant (16) du composant de revêtement (10), et dans lequel la face visible (34) de l'au moins un élément décoratif (22) est, dans la première position, décalée plus vers la face arrière (32) du composant de revêtement (10) que dans la seconde position, et **en ce que** la face visible (34) de l'au moins un élément décoratif (22) est conçue opaque, dans lequel un corps de base (42) de l'au moins un élément décoratif (22), lequel corps de base, dans la seconde position, dépasse au moins dans certaines zones de la face avant (16) du composant de revêtement (10), est au moins par endroits transparent à la lumière provenant d'un dispositif d'éclairage (44) de l'ensemble de revêtement extérieur (12).

2. Ensemble de revêtement extérieur selon la revendication 1,
**caractérisé en ce que**
le dispositif d'éclairage (44) comprend une pluralité de sources lumineuses (46), dans lequel une source lumineuse (46) respective est associée au corps de base (42) respectif de l'élément décoratif (22).

3. Ensemble de revêtement extérieur selon la revendication 1 ou 2,
**caractérisé en ce que**
l'ensemble de revêtement extérieur (12) comprend un dispositif de commande (54) conçu pour la commande du dispositif de déplacement (48) et/ou le dispositif d'éclairage (44).

4. Ensemble de revêtement extérieur selon l'une des revendications précédentes,
**caractérisé en ce que**
le dispositif de déplacement (48) est conçu pour déplacer ensemble au moins un groupe d'éléments décoratifs (22) de la première position vers la seconde position, dans lequel l'au moins un groupe est fourni par des éléments décoratifs (22) disposés en une rangée.

5. Ensemble de revêtement extérieur selon l'une des revendications précédentes,
**caractérisé en ce que**
le dispositif de déplacement (48) est conçu pour déplacer ensemble tous les éléments décoratifs (22) de la pièce décorative (20) de la première position vers la seconde position.

6. Ensemble de revêtement extérieur selon l'une des revendications précédentes,
**caractérisé en ce que**
la face visible (34) de l'au moins un élément décoratif (22) affleure, dans la première position, la face avant (16) du composant de revêtement (10).

7. Ensemble de revêtement extérieur selon l'une des revendications précédentes,
**caractérisé en ce**
**qu'**une couleur de la face visible (34) de l'au moins un élément décoratif (22) est identique à une couleur de la face avant (16) du composant de revêtement (10).

8. Véhicule automobile comportant au moins un ensemble de revêtement extérieur (12) selon l'une des revendications 1 à 7.
